Europäisches Patentamt

European Patent Office

Office européen des brevets

(11) Numéro de publication: **0 335 811**
A1

# (12) DEMANDE DE BREVET EUROPEEN

(21) Numéro de dépôt: **89420117.7**

(22) Date de dépôt: **30.03.89**

(51) Int. Cl.⁴: **D 03 C 9/00**
F 16 G 11/12

(30) Priorité: **31.03.88 FR 8804569**

(43) Date de publication de la demande:
**04.10.89 Bulletin 89/40**

(84) Etats contractants désignés:
**BE CH DE ES FR IT LI**

(71) Demandeur: **S.A. DES ETABLISSEMENTS STAUBLI (France)**
**B.P. 20 183 Rue des Usines**
**F-74210 Faverges (FR)**

(72) Inventeur: **Houlon, Louis**
**Duingt**
**FR-74410 Saint Jorioz (FR)**

(74) Mandataire: **Monnier, Guy et al**
**Cabinet Monnier 150 Cours Lafayette B.P. 3058**
**F-69393 Lyon Cédex 03 (FR)**

(54) **Système de tirage pour la commande des cadres de lisses des mécaniques d'armure du type négatif.**

(57) Le câble (14) associé à l'agrafe (4) du registre de ressorts (1) est lié au câble (8) qui assure la manoeuvre du cadre de lisses (7), par le moyen d'un mécanisme de levier tendeur (11) porté par le levier oscillant (5). Ce mécanisme (11) permet ainsi de détendre les ressorts (1a) du registre en vue de faciliter leur retrait ou leur mise en place.

Fig. 1

EP 0 335 811 A1

## Description

La présente invention a trait aux ratières et autres mécaniques d'armure du type négatif pour la formation de la foule sur les machines à tisser, et elle concerne plus particulièrement les systèmes de tirage destinés à opérer la commande des cadres de lisses associés à de telles mécaniques.

On sait que les mécaniques du type négatif n'assurent la commande positive des cadres de lisses que dans un seul sens de déplacement de ceux-ci, de telle sorte qu'il y a lieu de prévoir des moyens élastiques agencés de façon à opérer le rappel desdits cadres dans l'autre sens de la course.

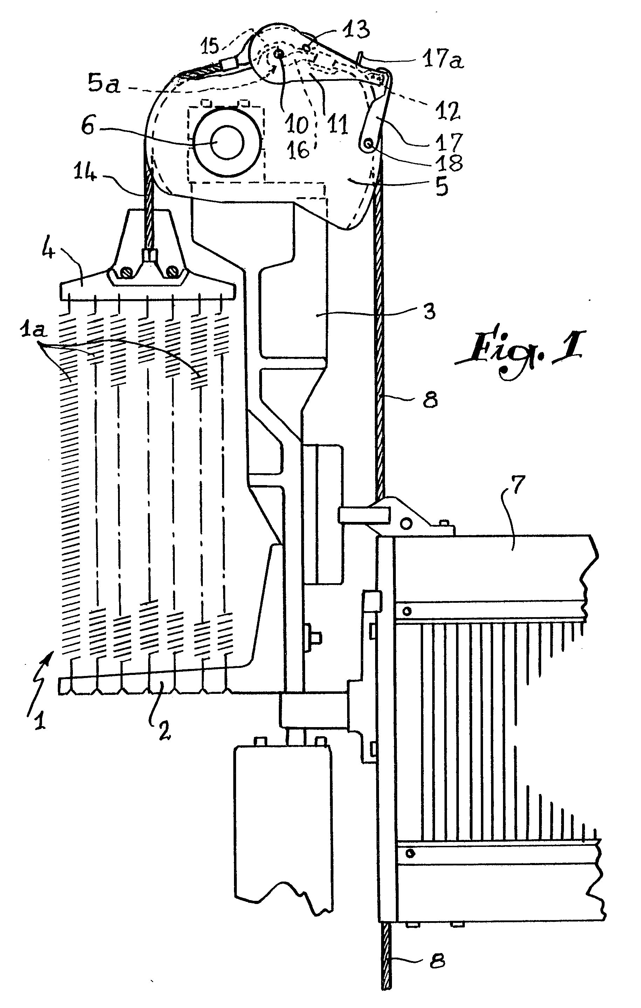

En fait et comme on l'a schématiquement représenté à la fig. 1 du dessin annexé aux présentes, les moyens élastiques associés à chaque cadre de lisses sont le plus souvent constitués par deux séries ou "registres" 1 de ressorts parallèles 1a ; dans chaque registre 1, ces ressorts 1a sont retenus entre un ratelier 2 fixé à la structure verticale 3 de la machine à tisser et une agrafe 4 rendue solidaire d'un levier oscillant 5, lequel est porté par un axe horizontal ou pivot 6 solidaire de ladite structure 3. Sur chacun des deux leviers oscillants 5 associés à un même cadre de lisses 7 vient s'arrimer l'extrémité d'un élément de transmission le plus souvent formé par câble de manoeuvre 8 qui est fixé latéralement au cadre 7 à commander et dont l'extrémité libre, convenablement renvoyée, est accrochée à l'organe mobile d'actionnement de la mécanique d'armure.

On comprend qu'un tel système de tirage assure bien la commande du cadre de lisses 7 puisque le déplacement de l'organe mobile précité provoque l'abaissement dudit cadre jusqu'à sa position basse à l'encontre des registres 1 qui sont aptes à ramener l'ensemble à la position haute par action sur chaque levier 5 dès que l'organe de la mécanique revient à sa position initiale.

L'augmentation des vitesses de fonctionnement maintenant exigées des machines de tissage implique un nombre croissant de ressorts 1a dans chaque registre 1, alors qu'en vue de limiter les efforts à fournir par la mécanique, il y a lieu de modifier le nombre et le type des ressorts en fonction de la vitesse de tissage et de la nature de l'article à tisser. Par ailleurs, il n'est pas rare qu'un ressort casse dans l'un des registres, si bien que les interventions au niveau de ceux-ci sont re lativement fréquentes.

Or, la pratique démontre que ces opérations sont rendues très malaisées par suite du nombre important des ressorts de chaque registre, de la force élevée de ces ressorts, et de l'emplacement même des registres dans la machine à tisser.

C'est à ces inconvénients qu'entend remédier la présente invention, laquelle consiste essentiellement à interposer sur l'élément de transmission qui relie l'agrafe de chaque registre à l'organe mobile d'actionnement correspondant de la mécanique, un mécanisme de levier tendeur propre à permettre, moyennant un allongement consécutif à un basculement suivant un axe orienté transversalement audit élément de transmission, de détendre momentanément les ressorts du registre en vue d'une intervention au niveau de celui-ci.

Le dessin annexé, donné à titre d'exemple, permettra de mieux comprendre l'invention, les caractéristiques qu'elle présente et les avantages qu'elle est susceptible de procurer :

Fig. 1 illustre de manière schématique l'agencement d'un système de tirage établi conformément à la présente invention.

Fig. 2 est une coupe verticale de détail montrant le mécanisme de levier tendeur, supposé amené à la position détendue du registre de ressorts correspondant.

Fig. 3 est une coupe transversale suivant la plan indiqué en III-III en fig. 2.

Fig. 4 reproduit fig. 2 à la position tendue du registre.

Fig. 5 montre une variante de réalisation de l'invention.

Fig. 6 et 7 illustrent un autre mode de mise en oeuvre.

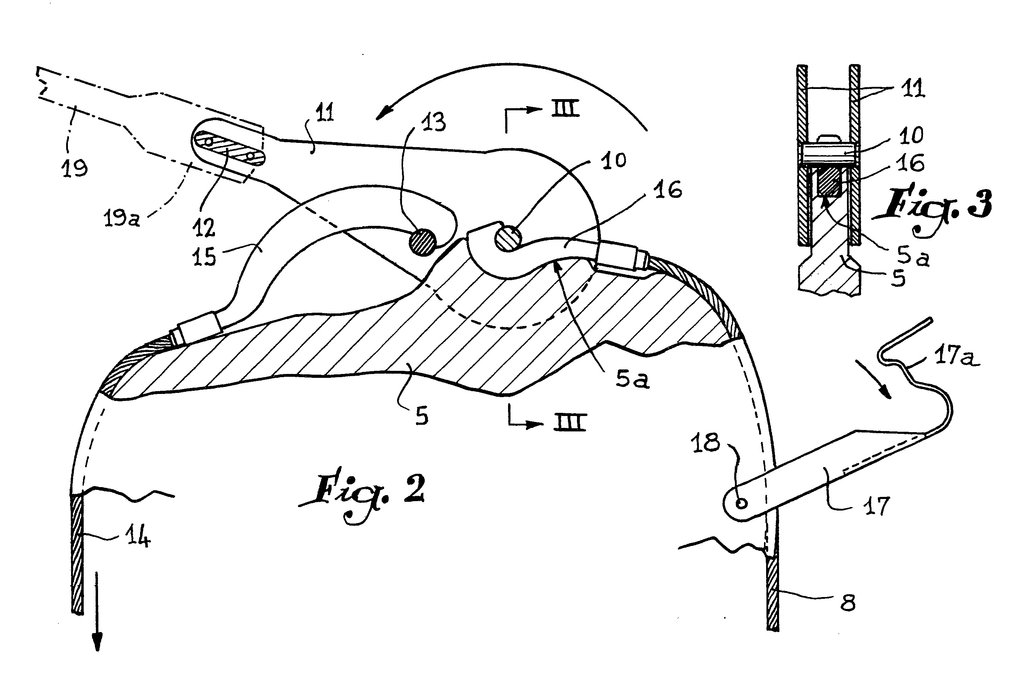

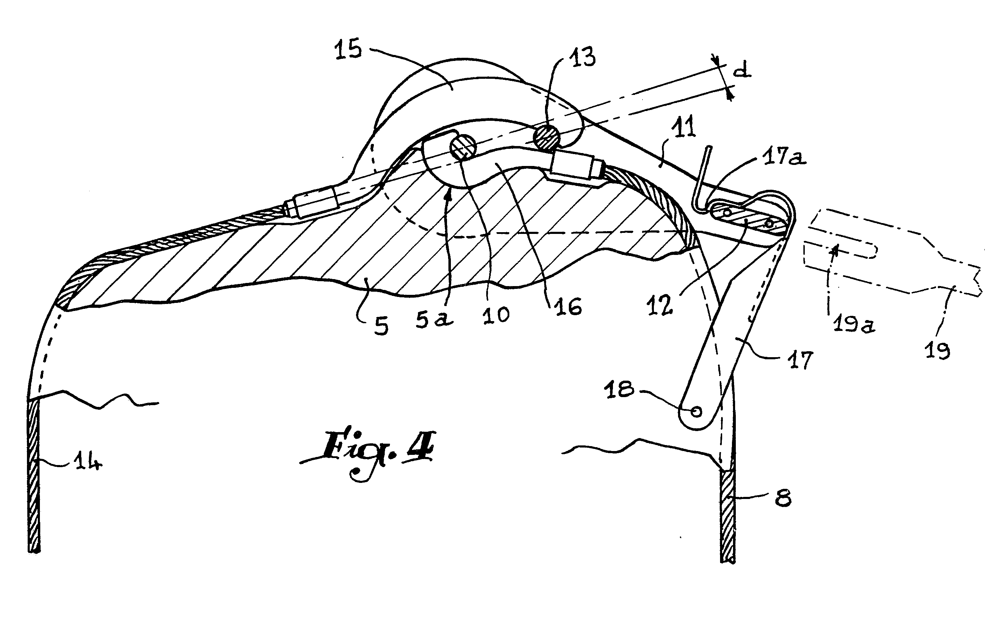

En fig. 2 à 4, on peut voir que la partie supérieure du levier référencé 5 en fig. 1 est conformée de manière à présenter une sorte de berceau 5a à l'intérieur duquel est engagé un axe transversal 10. Les extrémités de cet axe 10 sont supportées par les deux flasques qui composent un bras 11 et qui sont réunis l'un à l'autre par une entretoise d'extrémité 12 ; entre cette entretoise 12 et l'axe ou pivot 10, les deux flasques 11 portent un goujon transversal 13.

Revenant à fig. 1, on constate que l'agrafe 4 du registre 1 est rendue solidaire de l'extrémité d'un câble secondaire 14 dont l'extrémité opposée est pourvue d'un embout 15 engagé entre les flasques du bras 11 et profilé de manière à s'accrocher sur le goujon 13, comme illustré en fig. 2. De la même manière, l'extrémité supérieure du câble principal 8 attaché au cadre de lisses 7 est équipée d'un embout similaire 16 qui vient s'adapter dans le berceau 5a de façon à recevoir l'axe ou pivot 10 du bras 11, en formant ainsi support pour celui-ci.

Dans ces conditions, le câble principal 8 associé au cadre 7 et à la mécanique de tissage (non représentée), et le câble secondaire 14 associé à l'agrafe 4 et au registre 1, sont réunis l'un à l'autre à travers le mécanisme de levier tendeur formé par le bras 11 rendu solidaire du levier oscillant 5 à travers l'axe ou pivot 10. Par suite de l'écart longitudinal existant entre l'axe 10 et le goujon 13, on comprend que la longueur totale comprise entre l'extrémité dudit câble 8 et l'agrafe 4 varie en fonction de l'orientation du bras 11 par rapport à l'axe ou pivot 10.

- En fig. 2, le bras 11 est orienté vers la gauche, son entretoise 12 étant ainsi tournée du côté de l'agrafe 4, de telle sorte que les ressorts 1a du registre 1 ne sont pas sous tension et peuvent être aisément mis en place ou retirés dudit registre.

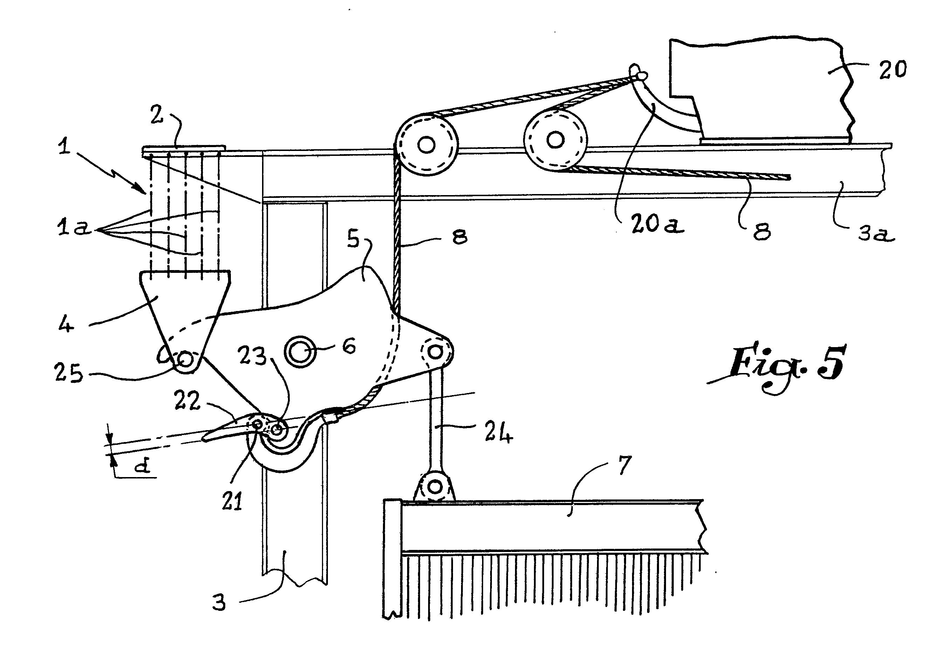

- Par contre, en fig. 4, le bras 11 a été supposé orienté à l'opposé, c'est-à-dire vers la droite avec l'entretoise 12 tournée du côté du cadre 7 de la même manière qu'en fig. 1, si bien que les ressorts 1a sont sous tension et que le registre 1 est en état de fonctionnement.

La position tendue suivant fig. 1 et 4 est parfaitement stable par suite du dépassement de point mort illustré en fig. 4 ; on peut voir en effet qu'à la position envisagée, la droite qui passe par l'axe du câble 14 et l'axe ou pivot 10 se trouve placée au-dessus de la droite qui relie l'axe du câble au goujon 13 (écart d).

Bien que de ce fait aucun déplacement angulaire intempestif du bras 11 ne soit à redouter, on peut néanmoins faire comporter au mécanisme de levier tendeur un verrou basculant 17 qui est articulé en 18 sur le levier oscillant 5 et dont l'extrémité libre 17a est profilée pour coopérer avec l'entretoise 12, laquelle est ainsi positivement retenue avec le bras 11 à la position tendue suivant fig. 4.

Il convient d'observer que cette entretoise 12 est elle-même avantageusement profilée pour coopérer avec l'extrémité fourchue 19a d'un outil amovible 19 propre à faciliter la manoeuvre angulaire du bras 11 eu égard à la résistance exercée par les ressorts qui composent le registre 1.

Fig. 5 illustre une variante de mise en oeuvre de l'invention, dans laquelle chacun des deux câbles principaux 8 associés à un même organe mobile d'actionnement 20a de la mécanique 20 vient directement se fixer au levier oscillant correspondant 5 par le moyen d'un embout 16 qui est profilé pour s'accrocher en 21 entre les flasques d'un mécanisme de levier tendeur formé par un bras basculant 22, articulé en 23 sur le levier oscillant 5 précité. Ce dernier est relié d'une part au cadre de lisses 7 par une biellette de suspension 24, d'autre part à l'agrafe 4 du registre 1 par un goujon 25 coopérant avec un bec latéral dudit levier.

Le fonctionnement est autrement identique à celui sus-exposé. Le bras basculant 22, retenu en position tendue par effet de dépassement du point mort (écart d) et/ou par un verrou analogue à celui référencé 17 dans la forme de réalisation suivant fig. 2 à 4, permet par sa manoeuvre angulaire de détendre et de retendre le registre 1 dont le ratelier fixe 2 est attaché à la poutre horizontale 3a de la structure 3 qui supporte la mécanique 20.

On comprend que le mécanisme de levier tendeur peut être placé en un point quelconque de chacun des éléments de transmission qui relient les organes d'actionnement 20a de la mécanique 20 aux registres de ressorts correspondants. En certains cas, ces éléments de transmission peuvent être constitués, non plus par des câbles 8 comme on l'a supposé ci-dessus, mais par des ensembles de leviers et bielles rigides.

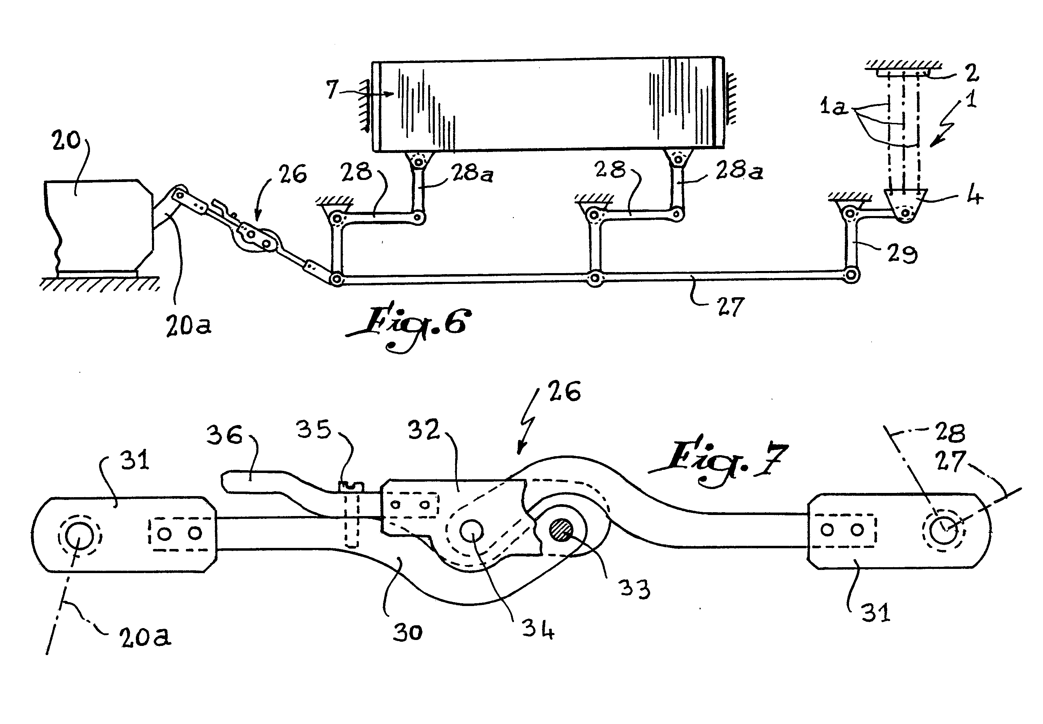

Fig. 6 illustre un tel mode de mise en oeuvre de l'invention. Chacun des organes mobiles d'actionnement 20a de la mécanique 20 est réuni, par l'intermédiaire d'un mécanisme de levier tendeur 26, à une bielle longitudinale 27 qui est attelée d'une part par des leviers 28 et des biellettes 28a au cadre de lisses 7 convenablement guidé verticalement, d'autre part par un levier pivotant 29 à un registre de ressorts unique 1.

Le mécanisme de levier tendeur 26 présente un agencement similaire à celui décrit ci-dessus. Comme montré en fig. 7, il comprend deux tiges profilées 30 pourvues à l'une de leurs extrémités d'une platine de fixation 31, l'extrémité opposée coopérant avec un bras basculant 32 conformé pour chevaucher les deux extrémités concourantes des tiges 30 précitées auxquelles il s'articule suivant des axes 33 et 34 décalés l'un par rapport à l'autre suivant l'axe commun auxdites tiges. On conçoit que le déplacement angulaire de ce bras 32 permet de modifier la longueur totale comprise entre les deux platines 31, la retenue du mécanisme à la position "courte" étant opérée de toute manière appropriée, par dépassement de point mort ou à l'aide d'une vis 35 qui traverse la poignée 36 du bras 32 pour se visser dans l'une des tiges 30.

**Revendications**

1. Système de tirage pour la commande des cadres de lisses des mécaniques d'armure du type négatif, du genre comprenant pour chaque cadre de lisses (7) au moins un élément de transmission (8, 27-28-29) dont l'une des extrémités est attachée à l'un des organes mobiles d'actionnement (20a) de la mécanique (20) tandis que l'extrémité opposée est associée à un registre (1) de ressorts (1a) destiné à assurer le rappel dudit cadre, caractérisé en ce qu'entre chaque registre (1) et l'organe mobile d'actionnement (20a) l'élément de transmission comprend un mécanisme de levier tendeur (11, 22) propre, par basculement suivant un axe orienté transversalement audit élément de transmission, à permettre de tendre et de détendre les ressorts (1a) en vue d'une intervention au niveau du registre (1).

2. Système suivant la revendication 1, du genre dans lequel l'élément de transmission est constitué par un câble (8) dont l'extrémité libre est arrimée à un levier oscillant (5) réuni au cadre (7) et au registre (1), caractérisé en ce que le mécanisme de levier tendeur comprend un bras (11) qui est retenu à pivotement sur le levier oscillant (5) en formant arrêt pour l'extrémité libre (16) du câble principal (8), lequel bras porte en outre un goujon (13) apte à former arrêt pour l'extrémité (15) d'un câble secondaire (14) lié à l'agrafe (4) du registre (1).

3. Système suivant la revendication 2, caractérisé en ce que le mécanisme de levier tendeur est formé par un bras pivotant (22) articulé (en 23) sur le levier oscillant (5) qui coopère directement avec l'une des extrémités du registre (1).

4. Système suivant l'une quelconque des revendications 1 à 3, caractérisé en ce que le mécanisme de levier tendeur (11, 22, 26) est maintenu à la position tendue du registre (1) par effet de dépassement de point mort (écart d).

5. Système suivant l'une quelconque des revendications 1 à 4, caractérisé en ce que le mécanisme de levier tendeur (11) est retenu à la position tendue du registre (1) à l'aide d'un verrou (17) porté par le levier oscillant (5).

6. Système suivant la revendication 5, caractérisé en ce que le bras pivotant (11, 22), formé par deux flasques parallèles, est pourvu d'une entretoise terminale (12) tandis que le verrou (17), prévu basculant, est profilé à son extrémité libre (17a) pour coopérer avec ladite entretoise.

7. Système suivant la revendication 4, caractérisé en ce qu'au mécanisme de levier tendeur (11, 22) est associé un outil amovible de manoeuvre (19) dont l'extrémité (19a) est conformée pour coopérer avec l'entretoise (12) en vue de rendre plus aisé l'actionnement dudit mécanisme.

8. Système suivant la revendication 1, du genre dans lequel l'élément de transmission est constitué par un ensemble de pièces (27-28-29) en forme de bielles et de leviers, caractérisé en ce que le mécanisme de levier tendeur (26) est formé par deux tiges profilées (30) dont les extrémités concourantes sont réunies par un bras basculant (32) qui est attelé auxdites tiges par deux axes (33, 34) décalés l'un par rapport à l'autre suivant l'axe commun à ces tiges.

*Fig. 1*

Fig. 2

Fig. 3

EP 0 335 811 A1

*Fig. 4*

15  13  d

11  17a

5  5a  10  16  12  17

18  19a  19

14  8

EP 0 335 811 A1

Fig. 5

EP 0 335 811 A1

Fig.6

Fig.7

EP 0 335 811 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| Y | EP-A-0136638 (STILO)<br>* abrégé; figure 1 *<br>--- | 1, 4, 8 | D03C9/00<br>F16G11/12 |
| Y | DE-C-702859 (BAYER)<br>* figures 1, 2 *<br>--- | 1, 7 | |
| Y | FR-A-2477186 (STAUBLI,)<br>* le document en entier *<br>----- | 1, 4, 7, 8 | |

**DOMAINES TECHNIQUES RECHERCHES (Int. Cl.4 )**

D03C
F16G

Le présent rapport a été établi pour toutes les revendications

| Lieu de la recherche | Date d'achèvement de la recherche | Examinateur |
|---|---|---|
| LA HAYE | 22 JUIN 1989 | BOUTELEGIER C.H.H. |